# EUROPEAN PATENT SPECIFICATION

(11) **EP 2 366 893 B1**
(45) Date of publication and mention of the grant of the patent: **09.03.2016**
(21) Application number: 10250890.0
(22) Date of filing: 07.05.2010
(51) Int. Cl.: F03D 3/06

(54) **Wind power generator having variable windmill wings**
Windkraftgenerator mit variablen Windmühlenflügeln
Générateur d'éolienne doté de pales d'éolienne variables

(30) Priority: 17.03.2010 KR 20100023951
(43) Date of publication of application: 21.09.2011
(73) Proprietor: Lee, In-nam, Namyangju-Si, Gyeonggi-do 472-908 (KR)
(72) Inventor: Lee, In-nam, Namyangju-Si, Gyeonggi-do 472-908 (KR)
(74) Representative: Merryweather, Colin Henry

(56) References cited:
- EP-A1- 0 379 626
- FR-A- 363 601
- GB-A- 2 202 592
- US-A- 1 111 350
- US-A- 1 914 426

## Description

The present invention relates to a wind power generator, and more particularly to, a wind power generator having variable windmill wings which can fold the windmill wings in the wind opposite direction and unfold the windmill wings in the wind blowing direction so as to minimize the air resistance applied to the windmill wings in the wind opposite direction, thus increasing the power generation efficiency, and which can be easily installed in a plural number even in a narrow space regardless of the installation location, thus maximizing the amount of power generation per unit area and achieving the industrial purpose.

In general, the recent power generation methods include heat power generation using a large amount of fossil fuels, nuclear power generation using uranium, water power generation using a large-scaled desalination equipment, and so on. As such power generation methods are responsible for the air pollution or global warming, generate radioactive wastes difficult to dispose of, or cause huge environmental destruction, environment-friendly power generation methods demand immediate attention. Research has been actively made on solar power generation and wind power generation which are alternative environment-friendly methods. In particular, the wind power generation using the wind force has been most preferred. More attention needs to be paid to the wind power generation in Korea surrounded by the sea on three sides.

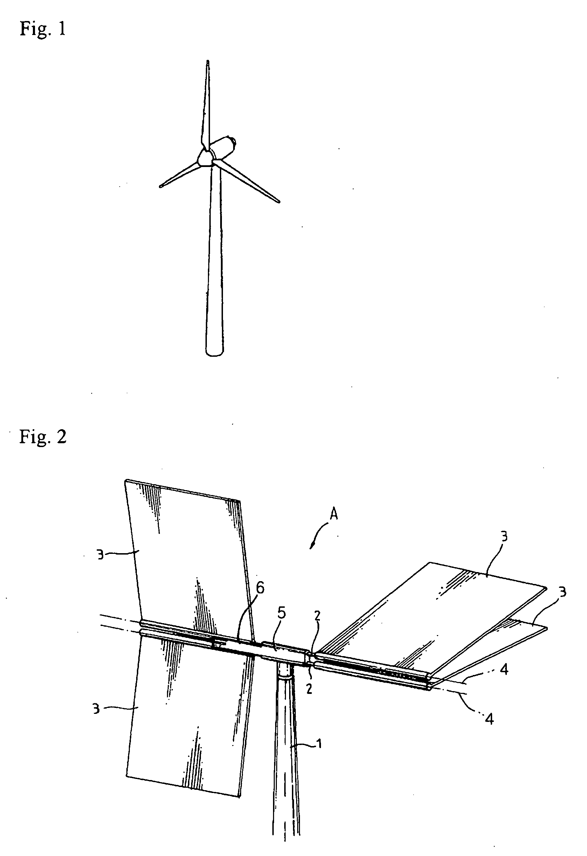

The wind power generation uses the wind which moves the air due to the air density difference. In the conventional wind power generation, as illustrated in FIG. 1, a pillar having a height of over 5 m is fixedly installed, and a propeller-type blade having two or more wings is installed at a top end of the pillar, thus constituting a power generator generating electricity using the rotation of the propeller-type blade. As the propeller-type blade rotates, the power generator generates power. Power generated by the plurality of wind power generators operated as described above is collected, charged in a charger, and used. However, in the conventional wind power generation, when the wind maintains at least a given velocity and the air has a high density, the propeller-type blade can be rotated to change the force of wind to power. In the event of a moderate wind, power generation is impossible. Accordingly, the conventional wind power generator is seldom efficient in remote places as well as city regions in which the direction of the wind is not constant. In addition, the conventional wind power generator is easily damaged by a strong wind, which incurs large maintenance and repair costs. Moreover, there is no economic advantage in terms of the equipment costs.

In order to solve the foregoing problems, Utility-Model Registration No. 0348990 titled by "Propeller for wind power generator" has been disclosed in the Utility-Model Registration Gazette.

According to Utility-Model Registration No. 0348990 titled by "Propeller for wind power generator", as illustrated in FIG. 2, the propeller for the wind power generator includes a main shaft 1 rotated, connected to the power generator, and performing power generation, driving shafts 2 fixed to the main shaft 1 at a right angle, rotating around the main shaft 1 to rotate the main shaft 1, and simultaneously pivoting around shaft lines 4 according to the direction of the wind, and wing plates 3 fixed to both ends of the driving shafts 2, pivoting on the driving shafts 2 according to the direction of the wind, and unfolded and folded around the shaft lines 4 of the driving shafts 2 by the wind, wherein a support bracket 5 integrally fixed to the main shaft 1, rotated with the main shaft 1, and pivotably fixing the driving shaft 2 is fixed to a top end of the main shaft 1, and gap maintaining parts 6 are formed on the lateral sides of the support bracket 5 to outwardly extend in the horizontal direction. As the one-side wing plates 3 are unfolded and the other-side wing plates 3 are folded according to the direction of the wind, the wind power generator can operate even by a gentle wind having a low velocity.

However, although Utility-Model Registration No. 0348990 titled by "Propeller for wind power generator" suggests the wing plates 3 unfolded or folded by the blowing wind, since the wing plates 3 are unfolded or folded after 90° movement, they may not be normally unfolded or folded. In addition, a plurality of wing plates 3 cannot be installed on the driving shaft 2 with the wing plate 3 thereon, so that the power generation efficiency is not high.

Therefore, the present invention has been made to solve various shortcomings and problems associated with the conventional general wind power generator, and an object of the present invention is to provide a wind power generator having variable windmill wings which can operate by a gentle wind having a low velocity regardless of the direction of the wind, thus increasing the power generation efficiency.

Another object of the present invention is to provide a wind power generator having variable windmill wings which can fold the windmill wings in the wind opposite direction and unfold the windmill wings in the wind blowing direction so as to minimize a resistance force exerted on a rotary force of a windmill shaft, thus increasing the power generation efficiency.

A further object of the present invention is to provide a wind power generator having variable windmill wings which can simplify the manufacturing process by the simple structure and be installed in a plural number in various places regardless of the installation location, thus maximizing the amount of power generation per unit area, achieving the industrial purpose, and generating electricity in the environment-friendly fashion without causing pollution such as greenhouse gas.

EP-0379626 discloses a windmill including a plurality of fan blade units pivotally mounted on a central vertical transmission shaft, in which a driving motor directly feathers the blade on the opposite side to the blade catching the incident wind.

According to an aspect of the present invention for achieving the above objects of the present invention, there is provided a wind power generator having variable windmill wings, which includes: an installation mount stood on the floor in the shape of a cross and having a vertical rotating shaft holder in a central portion thereof; a vertical rotating shaft rotatably installed in the central portion of the installation mount; a bearing into which a top end of the vertical rotating shaft is rotatably inserted; holders connected and fixed between the bearing and the installation mount; a plurality of inner wing installation units fixedly installed on the vertical rotating shaft at given intervals in the up/down direction; support rods having one-side ends fixed to the inner wing installation units; a plurality of outer wing installation units to which outer ends of the support rods are fixed; support rings made of a steel wire and connected to the outer wing installation units on the same plane; vertical support rods made of a steel wire and connecting the outer wing installation units of the same group in the up/down direction, the upper and lower outer wing installation units being grouped in the up/down direction; windmill wings installed between the inner wing installation units and the outer wing installation units in the up/down direction; support units installed on the vertical rotating shaft between the groups of the windmill wings made in the up/down direction, and connected to the holders through wires; power generation means installed on the bottom surface of the central portion of the installation mount; windmill wing fixing means installed on the vertical rotating shaft above the inner wing installation units to be movable in the up/down direction and fixing displacements of the windmill wings; and fixing means driving device installed on the bottom end side of the vertical rotating shaft.

According to the present invention, the wind power generator having the variable windmill wings can operate by a gentle wind having a low velocity regardless of the direction of the wind, thus increasing the power generation efficiency. In addition, the wind power generator having the variable windmill wings can fold the windmill wings in the wind opposite direction and unfold the windmill wings in the wind blowing direction so as to minimize a resistance force exerted on a rotary force of a windmill shaft, thus increasing the power generation efficiency. Moreover, the wind power generator having the variable windmill wings can simplify the manufacturing process by the simple structure and be installed in a plural number in various places regardless of the installation location, thus maximizing the amount of power generation per unit area, achieving the industrial purpose, and generating electricity in the environment-friendly fashion without causing pollution such as greenhouse gas.

Hereinafter, a wind power generator having variable windmill wings according to preferred embodiments of the present invention will be described in detail with reference to the accompanying drawings.
FIG. 1 is a perspective view of a general conventional wind power generator;
FIG. 2 is a perspective view of a propeller of a conventional wind power generator;

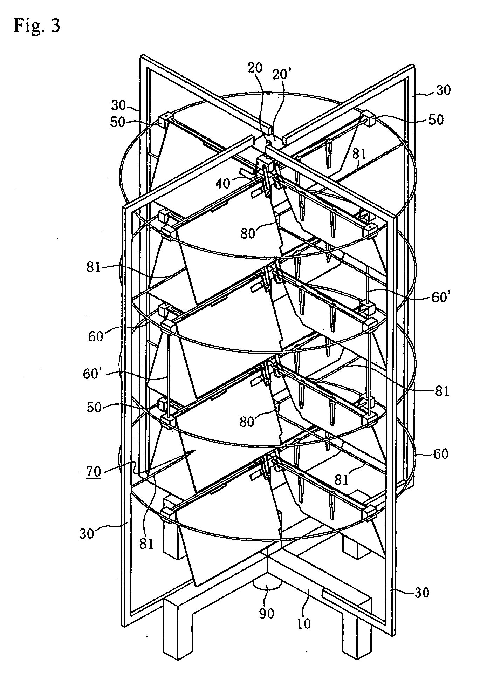

FIG. 3 is a perspective view of a wind power generator having variable windmill wings according to the present invention;
FIG. 4a is a perspective view illustrating an installation state of the windmill wings according to the present invention which are rotated in the clockwise direction;
FIG. 4b is a perspective view illustrating an installation state of the windmill wings according to the present invention which are rotated in the counterclockwise direction;
FIG. 5 is an exploded perspective view of major parts of the wind power generator having the variable windmill wings according to the present invention;
FIG. 6a is a perspective view of an inner wing installation unit and a moving unit according to another embodiment of the present invention;
FIG. 6b is a view of a multi-stage arrangement state of inner wing installation units and moving units in each group of the windmill wings according to the present invention;
FIG. 7a is a view of a fixing means driving device according to the present invention, when the windmill wings rotate;
FIG. 7b is a view of the fixing means driving device according to the present invention, when the rotation of the windmill wings is stopped;
FIG. 8a is an explanatory view of an operating state of the windmill wing fixing means according to the present invention, when the windmill wings rotate;
FIG. 8b is an explanatory view of an operating state of the windmill wing fixing means according to the present invention, when the rotation of the windmill wings is stopped;
FIG. 9a is a view of an operating state of the windmill wing fixing means according to the present invention, when the windmill wings rotate;
FIG. 9b is a view of an operating state of the windmill wing fixing means according to the present invention, when the rotation of the windmill wings is stopped;
FIG. 10a is a view of a state of the windmill wings displaced by the operation of the windmill wing fixing means according to the present invention, when the windmill wings rotate;
FIG. 10b is a view of a state of the windmill wings displaced by the operation of the windmill wing fixing means according to the present invention, when the rotation of the windmill wings is stopped; and
FIG. 11 is a schematic plan view of the flow of the wind between the windmill wings, when the wind power generator having the variable windmill wings according to the present invention is installed in a plural number.

### Explanation of Reference Numerals for Major Portions Shown in Drawings:

| | | | |
|---|---|---|---|
| 10: | Installation mount | 20: | Vertical rotating shaft |
| 20': | Bearing | 30: | C-shaped holder |
| 40: | Inner wing installation unit | 40': | Support rod |
| 40a, 40b, 40a', 40b': | Installation unit | 41: | Bolt |
| 42: | Bolt | 50: | Outer wing installation unit |
| 60: | Support ring | 60': | Vertical support rod |
| 70: | Windmill wing | 71: | Wing rotating shaft |
| 72: | Wing part | 73: | Wing spring |
| 80: | Support unit | 80a, 80b: | Support body |
| 81: | Wire | 82: | Bolt |
| 83: | Circular projection portion | 84a, 84b: | Support plate |
| 85: | Bracket | 86: | Bolt |
| 90: | Power generation means | 90': | Windmill wing fixing means |
| 91a, 91b, 91a', 91b': | unit | 92: | Bolt |
| 93: | Moving shaft | 94: | Straight lever |
| 95: | 'L'-shaped lever | 95a: | Stopper pin |
| 96: | Rotating shaft | 96a: | Spring |
| 97: | Lever | 100: | Fixing means driving device |
| 101: | Disk | 102: | Spiral pipe |
| 103: | Worm wheel | 104: | Worm |
| 105: | Motor | 106: | Roller |
| A: | Wind power generator | X: | pillar |
| Y: | wire | | |

A wind power generator A having variable windmill wings according to the present invention includes: an installation mount 10 stood on the floor in the shape of a cross (+) and having a vertical rotating shaft holder in a central portion thereof; a vertical rotating shaft 20 rotatably installed in the central portion of the installation mount 10; a bearing 20' into which a top end of the vertical rotating shaft 20 is rotatably inserted; C-shaped holders 30 (in this case beams) connected and fixed between the bearing 20' and the installation mount 10; a plurality of inner wing installation units 40 fixedly installed on the vertical rotating shaft 20 at given intervals in the up/down direction; support rods 40' having one-side ends fixed to the inner wing installation units 40; a plurality of outer wing installation units 50 to which outer ends of the support rods 40' are fixed; support rings 60 made of a steel wire and connected to the outer wing installation units 50 on the same plane; vertical support rods 60' made of a steel wire and connecting the outer wing installation units 50 of the same group in the up/down direction, the upper and lower outer wing installation units 50 being grouped in the up/down direction; windmill wings 70 installed between the inner wing installation units 40 and the outer wing installation units 50 in the up/down direction; support units 80 installed on the vertical rotating shaft 20 between the groups of the windmill wings 70 in the up/down direction, and connected to the C-shaped holders 30 through wires 81; power generation means 90 installed on the bottom surface of the central portion of the installation mount 10; windmill wing fixing means 90' installed on the vertical rotating shaft 20 above the inner wing installation units 40 to be movable in the up/down direction and fixing displacements of the windmill wings 70; and a fixing means driving device 100 installed on the bottom end side of the vertical rotating shaft 20.

Each of the inner wing installation units 40 is divided into an installation unit 40a and an installation unit 40b, which are coupled to each other by a bolt 41, one ends of the support rods 40' are inserted into the inner wing installation unit 40 in the horizontal direction from the front, rear, left and right directions and fixed thereto by a bolt 42 downwardly inserted from the top surface, one ends of wing rotating shafts 71 are rotatably inserted into the inner wing installation units 40 on the same plane as the support rods 40', one ends of rotating shafts 96 of the windmill wing fixing means 90' are rotatably inserted into the inner wing installation units 40 below the inserted portions of the support rods 40' and the wing rotating shafts 71, the other ends of the support rods 40' are inserted into and fixed to the outer wing installation units 50, and the respective other ends of the wing rotating shafts 71 and the rotating shafts 96 are rotatably inserted into the outer wing installation units 50.

Each of the windmill wings 70 includes a wing rotating shaft 71 rotatably installed between the inner wing installation unit 40 and the outer wing installation unit 50 on the same plane as the support rod 40', a wing part 72 having one side fixed to the wing rotating shaft 71, and a wing spring 73 inserted into a central portion of the wing rotating shaft 71 and maintaining the wing part 72 at 45° from the horizontal surface during non-operation.

Moreover, each of the support units 80 is divided into a support body 80a and a support body 80b, which are coupled to each other by a bolt 82, support plates are inserted into bottom circular projection portions 83 formed by the coupling of the support body 80a and the support body 80b, each of the support plates is divided into a support plate 84a and a support plate 84b so that one support plate forms a hinge structure and the other support plate is coupled to a bolt 86 through the medium of a bracket 85, one ends of the wires 81 are fixed to four edges of the coupled support plates 84a and 84b, and the other ends of the wires 81 are connected and fixed to the holders 30.

Each of the windmill wing fixing means 90' is divided into the moving unit 91 a and the moving unit 91b, which are coupled to each other by a bolt 92 so that the moving unit 91 a and the moving unit 91b can move in the up/down direction with the vertical rotating shaft 20 inserted into a central portion thereof, a moving shaft 93 for moving the moving unit 91 a and the moving unit 91b in the up/down direction is inserted and fixed between the moving unit 91a and the moving unit 91b, one ends of straight levers 94 are fixed to outer surfaces of the coupled moving units 91a and 91b, respectively, one ends of 'L'-shaped levers 95 are rotatably connected to the other ends of the straight levers 94, rotating shafts 96 provided with springs 96a are inserted into the other ends of the 'L'-shaped levers 95 and rotatably inserted into the inner wing installation units 40, stopper pins 95a for stopping rotation of the 'L'-shaped levers 95 are inserted into and fixed to the inner wing installation units 40 on which the other ends of the 'L'-shaped levers 95 are located, the springs 96a have one ends mounted on and fixed to the support rods 40' and the other ends fixed on the 'L'-shaped levers 95 adjacent to the connection portions of the straight levers 94 and the 'L'-shaped levers 95, and a plurality of levers 97 are fixed on the rotating shafts 96 at given intervals. Meanwhile, the fixing means driving device 100 includes: a disk 101 having the vertical rotating shaft 20 inserted into a central portion thereof, rotating on the vertical rotating shaft 20, and moving in the up/down direction; a spiral pipe 102 fitted around the vertical rotating shaft 20 to be movable in the up/down direction, having a top end fixed to a bottom surface of the disk 101, and having an outer circumferential portion spirally formed and screw-coupled to a central portion of a worm wheel; the worm wheel 103 having the central portion tooth-combined with the spiral pipe 102; a worm 104 tooth-combined with the outer circumference of the worm wheel 104; a motor 105 connected to a shaft of the worm 104; and a roller 106 installed at a bottom end of the moving shaft 93.

The inner wing installation units (40) may either have a structure in which the cutting plane which divides the installation unit into two (40a, 40b) is parallel to the outer side or a structure in which the cutting plane which divides the installation unit into two (40a', 40b') is diagonal, and employed for each group of the windmill wings in the up/down direction.

Here, the wing parts 72 are preferably made of a material having a light weight and a high intensity, and thus made of any one selected from the group consisting of transparent or opaque reinforced plastic, strengthened glass, non-ferrous metal, and duralumin.

The windmill wing fixing means (90') may either have a structure in which the cutting plane which divides the moving unit into two (91a, 91b) is parallel to the outer side, or has a structure in which the cutting plane which divides the moving unit into two (91a', 91b') is diagonal, the moving units of the parallel structure are employed for one group of the windmill wings in the up/down direction, and the moving units of the diagonal structure are employed for the other group.

The holders 30 may be C-shaped.

Here, preferably, a plurality of wind power generators A are installed in the front/rear and left/right horizontal directions, and the power generation means 90 of the respective wind power generators A are electrically connected to each other, so that power generated by each power generation means 90 is combined.

In addition, a plurality of pillars X are vertically installed on front/rear and left/right outer portions, and connected and fixed to the bearing portions 20' of the respective wind power generators A by wires Y, the wind power generators A do not hide the sunlight. Accordingly, the wind power generator A can be installed on a building, farmland, forest land, or marine farm, and thus is not limited in the installation location.

The reason for dividing the support unit 80 into the support body 80a and the support body 80b, the support plate into the support plate 84a and the support plate 84b, the windmill wing fixing means 90' into the moving unit 91 a and the moving unit 91b or the moving unit 91a' and the moving unit 91b', and the inner wing installation unit 40 into the installation unit 40a and the installation unit 40b or the installation unit 40a' and the installation unit 40b' is because a corresponding broken part can be easily replaced and repaired in the event of a failure.

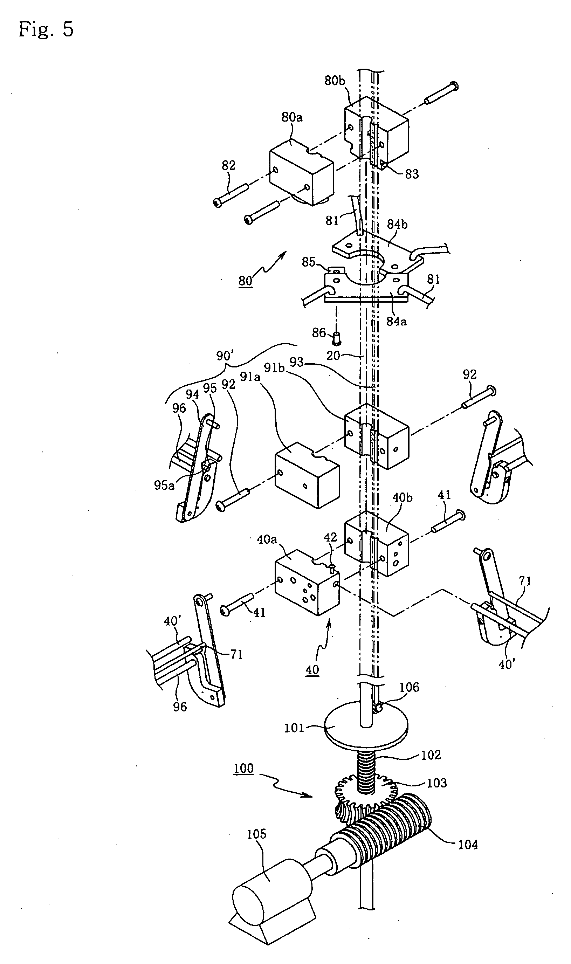

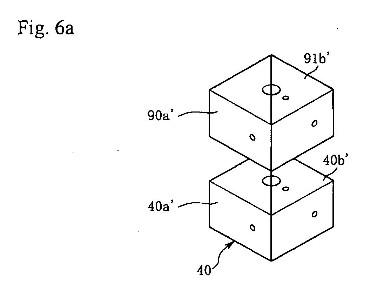

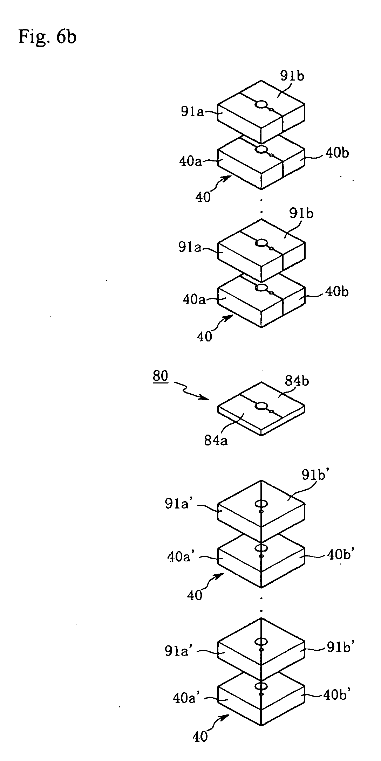

The inner wing installation units 40 have a structure in which the cutting plane of the central portion which divides the installation unit 40 into the installation unit 40a and the installation unit 40b is parallel to the outer side as shown in FIG. 5 and a structure in which the cutting plane which divides the installation unit 40 into the installation unit 40a' and the installation unit 40b' is diagonal as shown in FIG. 6a. In addition, the moving units are divided into a structure in which the cutting plane of the central portion for dividing the moving unit into the moving unit 91 a and the moving unit 91 b is parallel to the outer side as shown in FIG. 5 and a structure in which the cutting plane for dividing the moving unit into the moving unit 91a' and the moving unit 91b' is diagonal as shown in FIG. 6a. Referring to FIG. 6b, the installation units and the moving units are alternately installed so that the groups located over the support units 80 can be the groups in which the cutting surfaces are parallel to the outer side and the groups located below the support units 80 can be the groups in which the cutting surfaces are diagonal (or so that the groups located over the support units 80 can be the groups in which the cutting surfaces are diagonal and the groups located below the support units 80 can be the groups in which the cutting surfaces are parallel to the outer side). Therefore, the wing part 72 of one group which corresponds to the wing part 72 receiving the wind in the vertical direction among the wing parts 72 of the windmill wings 70 of the other group is more or less rotated than the wing part 72 receiving the wind in the vertical direction by 45°. In each group, whenever the wing rotating shafts 71 of the windmill wings 70 are rotated by 90°, the wing parts 72 receive the wind in the vertical direction. However, in terms of the entire groups, whenever the wing rotating shafts 71 are rotated by 45°, the wing parts 72 of the groups alternately receive the wind in the vertical direction, which brings about high efficiency wind power generation.

Next, the operation of the wind power generator having the variable wings with the above-described construction according to the present invention will be described in detail.

In the wind power generator A according to the present invention, the windmill wings 70 opposite to the wind blowing direction are pushed by the blowing wind, so that the wing parts 72 are suspended on the levers 97, receive the wind in the vertical state, and thus push the support rods 40'. Therefore, the wing parts 72 receiving the wind rotate the vertical rotating shaft 20 through the wing rotating shafts 71, thereby generating power.

Here, as the wing parts 72 rotated upon the rotation of the vertical rotating shaft 20 by 90 ° from the vertical surface orthogonal to the direction of the wind rotate again, the wing parts 72 are lifted to the horizontal state due to the resistance force of the air, and thus do not receive the resistance of the air. As the vertical rotating shaft 20 rotates, the wing parts 72 rotate again. The wing parts 72 rotated by 270 ° from the vertical surface orthogonal to the direction of the wind rotate again, and thus maintain 45 ° from a horizontal surface by the wing spring 73. In this situation, if the wing parts 72 rotate again, they are pushed again by the blowing wind, suspended on the levers 97, receive the wind in the vertical state, and push the wing rotating shafts 71, so that the vertical rotating shaft 20 is continuously rotated to generate power.

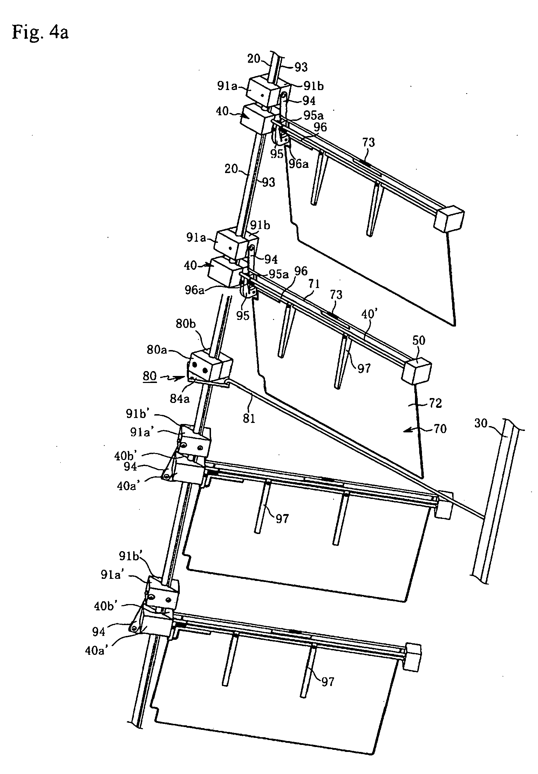

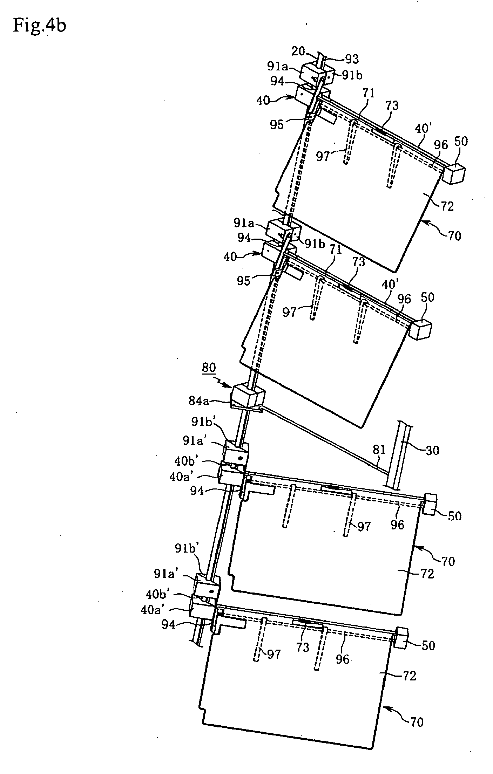

The operation of the windmill wings 70 described above can be accomplished in that the wing parts 72 receiving the wind are suspended on the levers 97 in the front/rear direction (see FIGS. 4a and 4b) and are horizontal with respect to the ground in the opposite side after 180° rotation.

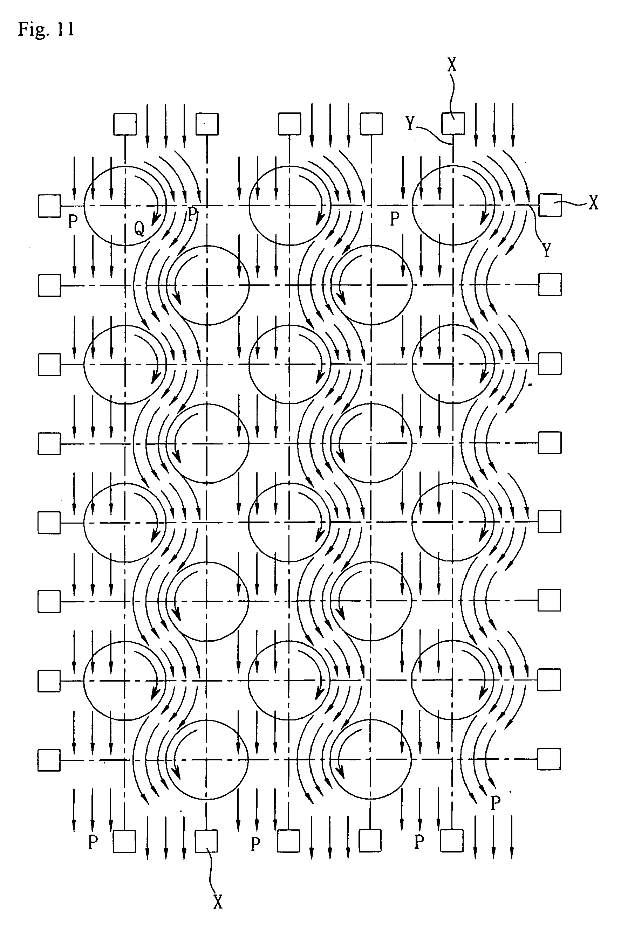

FIG. 11 is a schematic plan view of the flow of the wind between the windmill wings, when the wind power generator A having the variable windmill wings according to the present invention is installed in a plural number.

In FIG. 11, arrows P indicate the wind blowing directions and arrows Q indicate the rotation directions of the respective wind power generators A. The wind power generators A of the first column are rotated in the clockwise direction and the wind power generators A of the second column are rotated in the counterclockwise direction. In addition, the wind power generators A of the third column are rotated in the clockwise direction and the wind power generators A of the fourth column are rotated in the counterclockwise direction. In this way, the wind power generators A of the respective columns are alternately rotated in opposite directions.

Here, the wind blowing into a wide region gets stronger through narrow regions such as between the wind power generators A of the first column and the wind power generators A of the second column and between the wind power generators A of the third column and the wind power generators A of the fourth column, so that the power generation efficiency of the wind power generators A increases. In this case, even if the wind blows in the front/rear, left/right or diagonal direction, the wind power generators A make a pair by two columns, so that the wind power generators A of one column are rotated in the clockwise direction and the wind power generators A of the other column are rotated in the counterclockwise direction to generate power.

The rotation directions of the wind power generators A as described above can be accomplished in that each column selectively employs the structure in which the wing parts 72 are suspended on the front levers 97 in the rear (see FIG. 4a) and the structure in which the wing parts 72 are suspended on the rear levers 97 in the front (see FIG. 4b). That is, the wind power generators A having the windmill wings 70 as shown in FIG. 4a are rotated in the clockwise direction and the wind power generators A having the windmill wings 70 as shown in FIG. 4b are rotated in the counterclockwise direction.

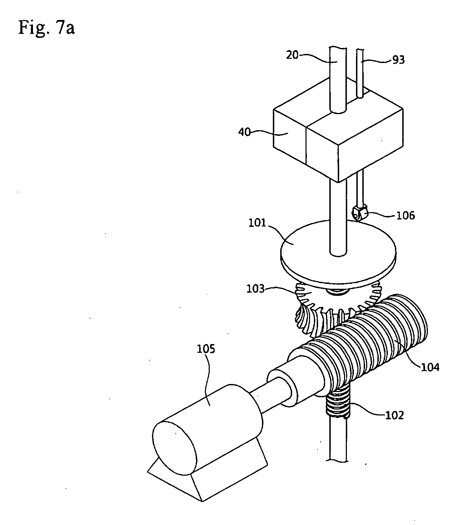

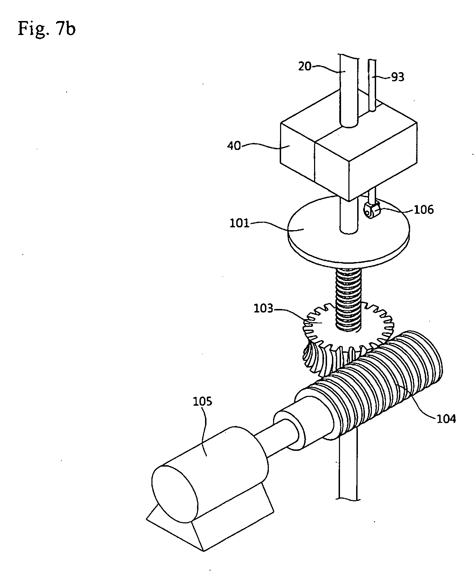

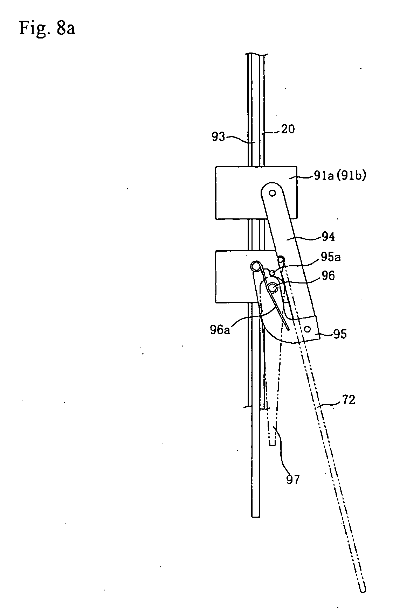

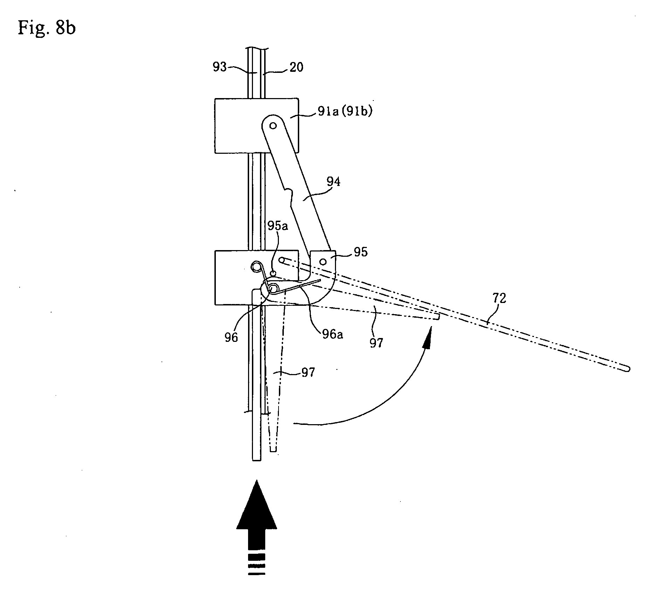

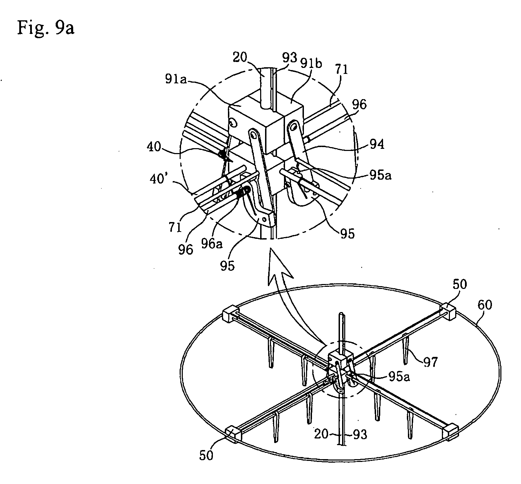

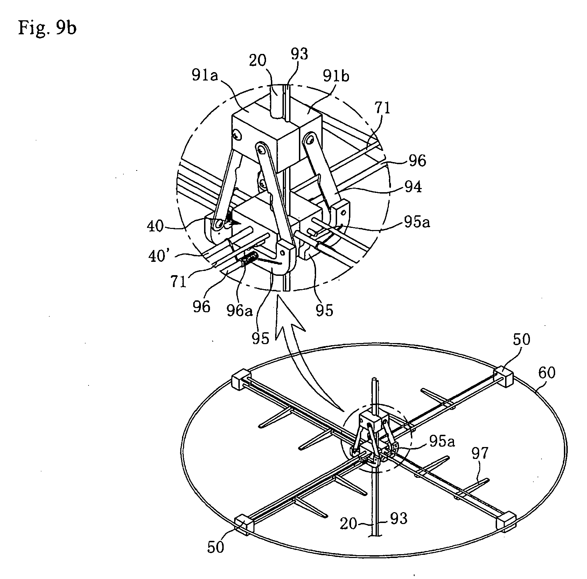

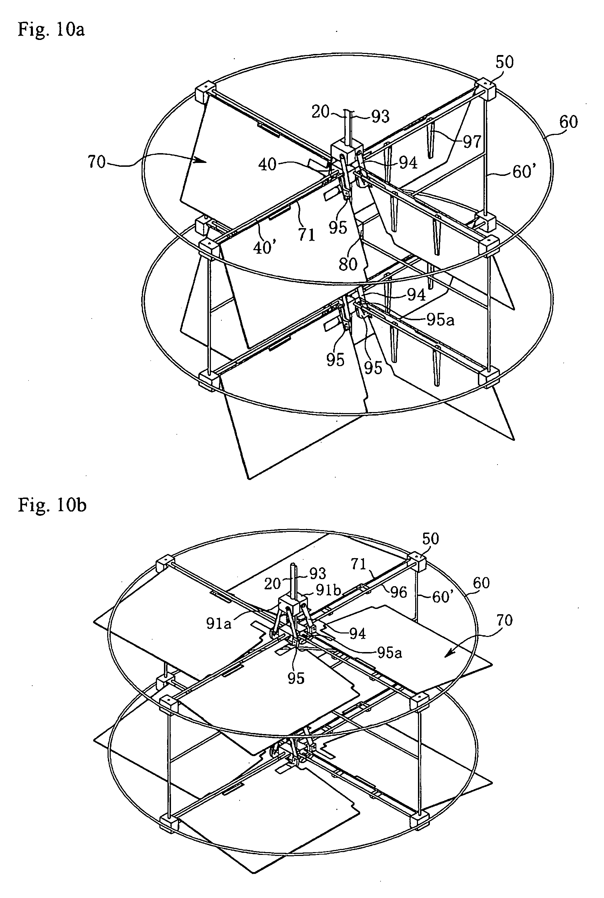

In the wind power generator A having the variable windmill wings according to the present invention which performs the wind power generation as described above, as illustrated in FIGS. 7a, 8a, 9a, and 10a, in a state where the windmill wing fixing means 90' do not operate, the levers 97 have a vertical downward state to maintain the windmill wings 70 receiving the wind to be in the vertical state, so that the windmill wings 70 operate in the normal state and generate power. If it is necessary to protect the wind power generator A from the storm or to mend, manage and repair the wind power generator A, in order to stop the operation of the wind power generator A, the fixing means driving device 100 is operated as shown in FIG. 7b, thus upwardly moving the moving shaft 93 of the windmill wing fixing means 90' as shown in FIGS. 8b, 9b, and 10b. That is, when the motor 105 is rotated in the normal direction, the worm 104 and the worm wheel 103 are rotated, the spiral pipe 102 is rotated in the clockwise direction and lifted, and the disk 101 is rotated in the clockwise direction and lifted, so that the lifted disk 101 upwardly moves the moving shaft 93.

Accordingly, the moving units 91a and 91b fixed to the moving shaft 93 are lifted along the vertical rotating shaft 20, and thus the straight levers 94 are lifted, upwardly pulling the 'L'-shaped levers 95. The rotating shafts 96 are rotated, so that the levers 97 lift the wing parts 72 of the windmill wings 70. Thus, the wing parts 72 of the entire windmill wings 70 maintain the horizontal state with respect to the ground not to receive the blowing wind (the state of FIGS. 8b, 9b and 10b) and the rotation of the vertical rotating shaft 20 is stopped. In this situation, the wind power generator A can be mended, managed and repaired.

Here, differently from the case in which the operation of the wind power generator A is stopped by upwardly moving the moving shaft 93 completely, the angle of the vertical surface to the wing parts 72 of the windmill wings 70 can be set according to the degree of upwardly moving the moving shaft 93. In the event of a storm, the moving shaft 93 is upwardly moved and fixed in advance according to the predicted intensity of the storm, so that the wing parts 72 do not receive the entire wind, but make some of the wind pass by. As a result, the wind power generator A can be protected from the storm.

Moreover, in order to lower and return the lifted moving shaft 93, the motor 105 is rotated in the reverse direction. That is, when the motor 105 is rotated in the reverse direction, the worm 104 and the worm wheel 103 are rotated, the spiral pipe 102 is rotated in the counterclockwise direction and lowered, and the disk 101 is rotated in the counterclockwise direction and lowered.

Therefore, the moving shaft 93 is lowered until the ends of the 'L'-shaped levers 95 are suspended on the stopper pins 95a to prevent rotation (the vertical downward state of the levers 97), so that the wind power generator A reaches the state shown in FIGS. 7a, 8a, 9a, and 10a, i.e., the normal power generation state.

While the present invention has been illustrated and described in connection with the preferred embodiments, the present invention is not limited thereto. Accordingly, it will be understood by those skilled in the art that various modifications and changes can be made thereto without departing from the scope of the invention defined by the appended claims.

## Claims

1. A wind power generator (A) having variable windmill wings (70), comprising:
an installation mount (10) stood on the floor in the shape of a cross and having a vertical rotating shaft holder in a central portion thereof;
a vertical rotating shaft (20) rotatably installed in the central portion of the installation mount (10);
a bearing (20') into which a top end of the vertical rotating shaft is rotatably inserted;
holders (30) connected and fixed between the bearing and the installation mount (10);
a plurality of inner wing installation units (40) fixedly installed on the vertical rotating (20) shaft at given intervals in the up/down direction;
support rods (40') having one-side ends fixed to the inner wing installation units (40);
a plurality of outer wing installation units (50) to which outer ends of the support rods (40') are fixed;
support rings (60) made of a steel wire and connected to the outer wing installation units (50) on the same plane;
vertical support rods (60') made of a steel wire and connecting the outer wing installation units (50) of the same group in the up/down direction, the upper and lower outer wing installation units (50) being grouped in the up/down direction;
windmill wings (70) installed between the inner wing installation units (40) and the outer wing installation units (50), whereby the windmill wings are grouped in the up/down direction;
support units (80) installed on the vertical rotating shaft (20) between the groups of the windmill wings (70) in the up/down direction, and connected to the holders (30) through wires (81);
power generation means (90) installed on the bottom surface of the central portion of the installation mount (10);
windmill wing fixing means (90') installed on the vertical rotating shaft (20) above the inner wing installation units (40) to be movable in the up/down direction and fixing displacements of the windmill wings (70); and
a fixing means driving device (100) installed on the bottom end side of the vertical rotating shaft (20),
wherein each of the inner wing installation units (40) is divided into two installation units, which are coupled to each other by a bolt (42), one ends of the support rods (40') are inserted into the inner wing installation unit (40) in the horizontal direction from the front, rear, left and right directions and fixed thereto by a bolt (42) downwardly inserted from the top surface, one ends of wing rotating shafts (71) are rotatably inserted into the inner wing installation units (40) on the same plane as the support rods (40'), one ends of rotating shafts (96) of the windmill wing fixing means (90') are rotatably inserted into the inner wing installation units (40) below the inserted portions of the support rods (40') and the wing rotating shafts (71), the other ends of the support rods (40') are inserted into and fixed to the outer wing installation units (50), and the respective other ends of the wing rotating shafts (71) and the rotating shafts (96) are rotatably inserted into the outer wing installation units (50).wherein each of the windmill wings comprises:
a wing rotating shaft (71) rotatably installed between the inner wing installation unit (40) and the outer wing installation unit (50) on the same plane as the support rod (40');
a wing (70) part having one side fixed to the wing rotating shaft (71); and
a wing spring (73) inserted into a central portion of the wing rotating shaft (71) and maintaining the wing part (72) at 45 degree from the horizontal surface during non-operation.
wherein each of the support units (80) is divided into two support bodies (80a, 80b), which are coupled to each other by a bolt (82), support plates (84a, 84b) are inserted into bottom circular projection portions (83) formed by the coupling of the two support bodies, each of the support plates being divided into two parts so that one part forms a hinge structure and the other part is coupled to a bolt (86) through the medium of a bracket (85), one ends of the wires (81) are fixed to four edges of the two coupled support plates, and the other ends of the wires (81) are connected and fixed to the holders (30).
wherein each of the windmill wing fixing means (90') is divided into two moving units (91 a, 91 b), which are coupled to each other by a bolt (92) so that the two moving units (91a, 91b) can move in the up/down direction with the vertical rotating shaft (20) inserted into a central portion thereof, a moving shaft (93) for moving the two moving units (91a, 91b) in the up/down direction is inserted and fixed between the two moving units (91a, 91b), one ends of straight levers (94) are fixed to outer surfaces of the two coupled moving units, respectively, one ends of 'L'-shaped levers (95) are rotatably connected to the other ends of the straight levers (94), rotating shafts (96) provided with springs are inserted into the other ends of the 'L'-shaped levers (95) and rotatably inserted into the inner wing installation units (40), stopper pins (95a) for stopping rotation of the 'L'-shaped levers (95) are inserted into and fixed to the inner wing installation units (40), the springs (96a) have one ends mounted on and fixed to the support rods (40') and the other ends fixed on the 'L'-shaped levers (95) adjacent to the connection portions of the straight levers (94) and the 'L'-shaped levers (95), and a plurality of further levers (97) are fixed on the rotating shafts at given intervals.
wherein the fixing means driving device (100) comprises:
a disk (101) having the vertical rotating shaft (20) inserted into a central portion thereof, rotating on the vertical rotating shaft (20), and moving in the up/down direction;
a spiral pipe (102) fitted around the vertical rotating shaft (20) to be movable in the up/down direction, having a top end fixed to a bottom surface of the disk (101), and having an outer circumferential portion spirally formed and screw-coupled to a central portion of a worm wheel (103);
the worm wheel (103) having the central portion tooth-combined with the spiral pipe (102);
a worm (104) tooth-combined with the outer circumference of the worm wheel (103);
a motor (105) connected to a shaft of the worm (104); and
a roller (106) installed at a bottom end of the moving shaft (93).

2. A wind power generator according to claim 1, wherein the inner wing installation units (40) either have a structure in which the cutting plane which divides the installation unit into two (40a, 40b) is parallel to the outer side or a structure in which the cutting plane which divides the installation unit into two (40a', 40b') is diagonal, and employed for each group of the windmill wings in the up/down direction.

3. A wind power generator according to claim 2, wherein the wing parts (72) are made of any one selected from the group consisting of transparent or opaque reinforced plastic, strengthened glass, non-ferrous metal, and duralumin.

4. A wind power generator according to claim 3, wherein the windmill wing fixing means (90') either have a structure in which the cutting plane which divides the moving unit into two (91a, 91b) is parallel to the outer side, or has a structure in which the cutting plane which divides the moving unit into two (91a', 91b') is diagonal,
the moving units of the parallel structure are employed for one group of the windmill wings in the up/down direction, and the moving units of the diagonal structure are employed for the other group.

5. A wind power generator according to any one of the preceding claims, wherein the holders are C-shaped.

6. A plurality of wind power generators, each according to any one of the preceding claims, wherein the wind power generators are installed in the front/rear and left/right horizontal directions, and the power generation means of the respective wind power generators are electrically connected to each other, so that power generated by each power generation means is combined.

7. The wind power generator of Claim 6, wherein a plurality of pillars (X) are vertically installed on front/rear and left/right outer portions, and connected and fixed to the bearing portions of the respective wind power generators by wires (Y).

## Patentansprüche

1. Windenergie-Generator (A), welcher variable Windmühlenflügel (70) aufweist, umfassend:
eine Montagehalterung (10), welche in der Form eines Kreuzes auf dem Boden steht und eine vertikale Drehwellenhalterung in einem zentralen Abschnitt davon aufweist;
eine vertikale Drehwelle (20), welche drehbar in dem zentralen Abschnitt der Montagehalterung (10) montiert ist;
ein Lager (20'), in welches ein oberes Ende der vertikalen Drehwelle drehbar eingeführt ist;
Halter (30), welche zwischen dem Lager und der Montagehalterung (10) verbunden und befestigt sind;
eine Mehrzahl von inneren Flügelmontageeinheiten (40), welche fest auf der vertikalen Drehwelle (20) an vorbestimmten Abständen in der Richtung nach oben/unten montiert sind;
Haltestangen (40'), bei welchen an einer Seite Enden an den inneren Flügelmontageeinheiten (40) befestigt sind,
eine Mehrzahl von äußeren Flügelmontageeinheiten (50), an welchen äußere Enden der Haltestangen (40') befestigt sind;
Halteringe (60), welche aus Stahldraht hergestellt sind und mit den äußeren Flügelmontageeinheiten (50) auf derselben Ebene verbunden sind;
vertikale Haltestangen (60'), welche aus Stahldraht hergestellt sind und die äußeren Flügelmontageeinheiten (50) derselben Gruppe in der Richtung nach oben/unten verbinden, wobei die oberen und die unteren äußeren Flügelmontageeinheiten (50) in der Richtung nach oben/unten gruppiert sind;
Windmühlenflügel (70), welche zwischen den inneren Flügelmontageeinheiten (40) und den äußeren Flügelmontageeinheiten (50) angebracht sind, wobei die Windmühlenflügel in der Richtung nach oben/unten gruppiert sind;
Halteeinheiten (80), welche auf der vertikalen Drehwelle (20) zwischen den Gruppen der Windmühlenflügel (70) in der Richtung nach oben/unten angebracht sind und an den Haltern (30) durch Kabel (81) verbunden sind;
Stromerzeugungsmittel (90), welche auf der Bodenfläche des zentralen Abschnitts der Montagehalterung (10) angebracht sind;
Windmühlenflügel-Befestigungsmittel (90'), welche auf der vertikalen Drehwelle (20) oberhalb der inneren Flügelmontageeinheiten (40) angebracht sind, um in der Richtung nach oben/unten bewegbar zu sein und Verschiebungen der Windmühlenflügel (70) zu fixieren; und
eine Fixierungsmittel-Antriebsvorrichtung (100), welche auf der Bodenendseite der vertikalen Drehwelle (20) angebracht ist,
wobei jede der inneren Flügelmontageeinheiten (40) in zwei Montageeinheiten aufgeteilt ist, welche durch einen Bolzen (42) miteinander gekoppelt sind, wobei Enden der Haltestangen (40') in der horizontalen Richtung von der vorderen, hinteren, linken und rechten Richtung in die innere Flügelmontageeinheit (40) eingeführt und daran durch einen Bolzen (42) befestigt sind, welcher von der oberen Fläche nach unten eingeführt ist, wobei Enden der Flügeldrehwellen (71) drehbar in die inneren Flügelmontageeinheiten (40) auf derselben Ebene wie die Haltestangen (40') eingeführt sind, wobei Enden der Drehwellen (96) der Windmühlenflügel-Befestigungsmittel (90') drehbar in die inneren Flügelmontageeinheiten (40) unterhalb der eingeführten Abschnitte der Haltestangen (40') und der Flügeldrehwellen (71) eingeführt sind, wobei die anderen Enden der Haltestangen (40') in die äußeren Flügelmontageeinheiten (50) eingeführt und an diesen befestigt sind, und wobei die entsprechenden anderen Enden der Flügeldrehwellen (71) und der Drehwellen (96) drehbar in die äußeren Flügelmontageeinheiten (50) eingeführt sind, wobei jeder der Windmühlenflügel umfasst:
eine Flügeldrehwelle (71), welche drehbar zwischen der inneren Flügelmontageeinheit (40) und der äußeren Flügelmontageeinheit (50) auf derselben Ebene wie die Haltestange (40') montiert ist;
ein Flügel(70)-Teil, bei welchem eine Seite an der Flügeldrehwelle (71) befestigt ist; und
eine Flügelfeder (73), welche in einen zentralen Abschnitt der Flügeldrehwelle (71) eingeführt ist und den Flügelteil (72) bei 45 Grad von der horizontalen Fläche während eines Nicht-Betriebs hält,
wobei jede der Halteeinheiten (80) in zwei Haltekörper (80a, 80b) unterteilt ist, welche durch einen Bolzen (82) miteinander gekoppelt sind, wobei Halteplatten (84a, 84b) in Bodenkreisprojektionsabschnitte (83) eingeführt sind, welche durch das Koppeln der zwei Haltekörper ausgebildet sind, wobei jede der Halteplatten in zwei Teile geteilt sind, so dass ein Teil eine Gelenkstruktur ausbildet und das andere Teil mit einem Bolzen (86) durch die Mitte einer Halterung (85) gekoppelt ist, wobei Enden der Kabel (81) an vier Rändern der zwei gekoppelten Halteplatten befestigt sind, und wobei die anderen Enden der Kabel (81) mit den Haltern (30) verbunden und mit diesen befestigt sind,
wobei jedes der Windmühlenflügel-Befestigungsmittel (90') in zwei bewegliche Einheiten (91 a, 91 b) unterteilt ist, welche durch einen Bolzen (92) miteinander gekoppelt sind, so dass die zwei beweglichen Einheiten (91 a, 91 b) in der Richtung nach oben/unten mit der vertikalen Drehwelle (20), welche in einen zentralen Abschnitt davon eingeführt ist, bewegt werden können, wobei die bewegliche Welle (93) zum Bewegen der zwei beweglichen Einheiten (91 a, 91 b) in der Richtung nach oben/unten zwischen den zwei beweglichen Einheiten (91 a, 91 b) eingeführt und befestigt ist, wobei jeweils Enden von geradlinigen Hebeln (94) an äußeren Flächen der zwei gekoppelten beweglichen Einheiten befestigt sind, wobei Enden von 'L'-förmigen Hebeln (95) drehbar mit den anderen Enden der geradlinigen Hebel (94) gekoppelt sind, wobei Drehwellen (96), welche mit Federn versehen sind, in die anderen Enden der' L'-förmigen Hebel (95) eingeführt sind und drehbar in die inneren Flügelmontageeinheiten (40) eingeführt sind, wobei Stopp-Stifte (95a) zum Stoppen einer Drehung der 'L'-förmigen Hebel (95) in die inneren Flügelmontageeinheiten (40) eingeführt sind und an diesen befestigt sind, wobei die Federn (96a) aufweisen Enden, welche auf den Haltestangen (40') angebracht und mit diesen befestigt sind, und andere Enden, welche an den 'L'-förmigen Hebel (95) benachbart zu den Verbindungsabschnitten der geradlinigen Hebel (94) und der 'L'-förmigen Hebel (95) befestigt sind, und wobei eine Mehrzahl von weiteren Hebeln (97) an den Drehwellen in vorbestimmten Abständen befestigt sind,
wobei die Befestigungsmittel-Antriebsvorrichtung (100) umfasst:
eine Scheibe (101), bei welcher die vertikale Drehwelle (20) in einen zentralen Abschnitt davon eingeführt ist, welche sich auf der vertikalen Drehwelle (20) dreht und sich in der Richtung nach oben/unten bewegt;
ein Spiralrohr (102), welches um die vertikale Drehwelle (20) herum angepasst ist, um in der Richtung nach oben/unten bewegbar zu sein, welches ein oberes Ende aufweist, das an einer Bodenfläche der Scheibe (101) befestigt ist, und welches einen Außenumfangsabschnitt aufweist, welcher spiralförmig ausgebildet ist und schraubenartig mit einem zentralen Abschnitt eines Schneckenrads (103) gekoppelt ist;
das Schneckenrad (103), welches den zentralen Abschnitt aufweist, welcher mittels Zähnen mit dem Spiralrohr (102) kombiniert ist;
ein Gewinde (104), welches mittels Zähnen mit dem Außenumfang des Schneckenrads (103) kombiniert ist;
einen Motor (105), welcher mit einer Welle des Gewindes (104) verbunden ist; und
eine Rolle (106), welche an einem Bodenende der beweglichen Welle (93) montiert ist.

2. Windenergie-Generator nach Anspruch 1, wobei die inneren Flügelmontageeinheiten (40) entweder eine Struktur aufweisen, bei welcher die Schnittebene, welche die Montageeinheit in zwei (40a, 40b) teilt, parallel zu der Außenseite liegt, oder eine Struktur aufweisen, bei welcher die Schnittebene, welche die Montageeinheit in zwei (40a', 40b') teilt, diagonal verläuft, und für jede Gruppe der Windmühlenflügel in der Richtung nach oben/unten eingesetzt werden.

3. Windenergie-Generator nach Anspruch 2, wobei die Flügelteile (72) hergestellt sind aus etwas, welches ausgewählt ist aus der Gruppe, welche besteht aus transparentem oder undurchsichtigem verstärktem Kunststoff, verstärktem Glas, nicht eisenhaltigem Metall und Duraluminium.

4. Windenergie-Generator nach Anspruch 3, wobei die Windmühlenflügel-Befestigungsmittel (90') entweder eine Struktur aufweisen, bei welcher die Schnittebene, welche die bewegliche Einheit in zwei (91 a, 91 b) teilt, parallel zu der Außenseite liegt, oder eine Struktur aufweisen, bei welcher die Schnittebene, welche die bewegliche Einheit in zwei (91a', 91b') teilt, diagonal verläuft,
wobei die beweglichen Einheiten der parallelen Struktur für eine Gruppe der Windmühlenflügel in der Richtung nach oben/unten eingesetzt werden, und wobei die beweglichen Einheiten der diagonalen Struktur für die andere Gruppe eingesetzt werden.

5. Windenergie-Generator nach einem der vorhergehenden Ansprüche, wobei die Halter C-förmig sind.

6. Mehrzahl von Windenergie-Generatoren jeweils nach einem der vorhergehenden Ansprüche, wobei die Windenergie-Generatoren in der nach vorn/hinten und nach links/rechts gerichteten horizontalen Richtung montiert sind, und wobei die Stromerzeugungsmittel der entsprechenden Windenergie-Generatoren elektrisch miteinander verbunden sind, so dass der Strom, welcher durch die jeweiligen Stromerzeugungsmittel erzeugt wird, kombiniert wird.

7. Windenergie-Generator nach Anspruch 6, wobei eine Mehrzahl von Pfeilern (X) vertikal auf vorderen/hinteren und linken/rechten Außenabschnitten montiert sind und mit den Lagerabschnitten der entsprechenden Windenergie-Generatoren durch Kabel (Y) verbunden und an diesen befestigt sind.

## Revendications

1. Génératrice éolienne (A) ayant des pales variables (70), comprenant :
un support d'installation (10) posé au sol, en forme de croix et comportant dans une partie centrale un support d'arbre rotatif vertical ;
un arbre rotatif vertical (20) installé à rotation dans la partie centrale du support d'installation (10) ;
un roulement (20') dans lequel une extrémité supérieure de l'arbre rotatif vertical est insérée à rotation ;
des éléments de maintien (30) connectés et fixés entre le roulement et le support d'installation (10) ;
une pluralité d'unités d'installation de pales intérieures (40) installées de manière fixe sur l'arbre rotatif vertical (20) à des intervalles donnés dans la direction verticale ;
des tiges de support (40') ayant des extrémités d'un côté fixées aux unités d'installation de pales intérieures (40) ;
une pluralité d'unités d'installation de pales extérieures (50) auxquelles sont fixées les extrémités extérieures des tiges de support (40') ;
des anneaux de support (60) en fil d'acier et connectés aux unités d'installation de pales extérieures (50) sur le même plan ;
des tiges de support verticales (60') en fil d'acier et connectant les unités d'installation de pales extérieures (50) du même groupe dans la direction verticale, les unités d'installation de pales extérieures (50) supérieures et inférieures étant groupées dans la direction verticale ;
des pales (70) installées entre les unités d'installation de pales intérieures (40) et les unités d'installation de pales extérieures (50), les pales étant groupées dans la direction verticale ;
des unités de support (80) installées sur l'arbre rotatif vertical (20) entre les groupes de pales (70) dans la direction verticale, et connectées aux éléments de maintien (30) par l'intermédiaire de fils métalliques (81) ;
un moyen de production d'énergie (90) installé sur la surface inférieure de la partie centrale du support d'installation (10) ;
un moyen de fixation de pale (90') installé sur l'arbre rotatif vertical (20) au-dessus des unités d'installation de pales intérieures (40) pour être mobile dans la direction verticale et qui fixe les déplacements des pales (70) ; et
un dispositif d'entraînement de moyen de fixation (100) installé du côté de l'extrémité inférieure de l'arbre rotatif vertical (20),
dans laquelle chacune des unités d'installation de pales intérieures (40) est divisée en deux unités d'installation, qui sont couplées l'une à l'autre par un boulon (42), une extrémité des tiges de support (40') est insérée dans l'unité d'installation de pales intérieures (40) dans la direction horizontale depuis les directions avant, arrière, gauche et droite et fixée à celle-ci par un boulon (42) inséré vers le bas depuis la surface supérieure, une extrémité d'arbres de rotation de pales (71) est insérée à rotation dans les unités d'installation de pales intérieures (40) sur le même plan que les tiges de support (40'), une extrémité d'arbres rotatifs (96) du moyen de fixation de pale (90') est insérée à rotation dans les unités d'installation de pales intérieures (40) sous les parties insérées des tiges de support (40') et les arbres de rotation de pales (71), les autres extrémités des tiges de support (40') sont insérées dans et fixées aux unités d'installation de pales extérieures (50), et les autres extrémités respectives des arbres de rotation de pales (71) et les arbres rotatifs (96) sont insérés à rotation dans les unités d'installation de pales extérieures (50), chacune des pales comprenant :
un arbre de rotation de pales (71) installé à rotation entre l'unité d'installation de pales intérieures (40) et l'unité d'installation de pales extérieures (50) sur le même plan que la tige de support (40') ;
une partie de pale (70) ayant un côté fixé à l'arbre de rotation de pales (71) ; et
un ressort de pale (73) inséré dans une partie centrale de l'arbre de rotation de pales (71) et maintenant la partie de pale (72) à 45 degrés de la surface horizontale en période hors fonctionnement ;
dans laquelle chacune des unités de support (80) est divisée en deux corps de support (80a, 80b) qui sont couplés l'un à l'autre par un boulon (82), des plaques de support (84a, 84b) sont insérées dans des parties saillantes circulaires inférieures (83) formées par le couplage des deux corps de support, chacun des plaques de support étant divisée en deux parties de telle manière qu'une partie forme une structure de charnière et l'autre partie est couplée à un boulon (86) par l'intermédiaire d'un support (85), une extrémité des fils (81) est fixée à quatre bords des deux plaques de support couplées, et les autres extrémités des fils (81) sont reliées et fixées aux éléments de maintien (30) ;
dans laquelle chacun des moyens de fixation de pale (90') est divisé en deux unités mobiles (91a, 91b), qui sont couplées l'une à l'autre par un boulon (92) de telle manière que les deux unités mobiles (91a, 91b) peuvent se déplacer dans la direction verticale avec l'arbre rotatif vertical (20) inséré dans une partie centrale de celles-ci, un arbre mobile (93) pour déplacer les deux unités mobiles (91a, 91b) dans la direction verticale est inséré et fixé entre les deux unités mobiles (91a, 91b), une extrémité de leviers droits (94) est fixée respectivement aux surfaces extérieures des deux unités mobiles couplées, une extrémité de leviers en forme de L (95) est connectée à rotation aux autres extrémités des leviers droits (94), des arbres rotatifs (96) pourvus de ressorts sont insérés dans les autres extrémités des leviers en L (95) et insérés à rotation dans les unités d'installation de pales intérieures (40), des ergots d'arrêt (95a) pour arrêter la rotation des leviers en L (95) sont insérés dans et fixés aux unités d'installation de pales intérieures (40), les ressorts (96a) ont une extrémité montée sur et fixée aux tiges de support (40') et l'autre extrémité fixée aux leviers en L (95) adjacents aux parties de connexion des leviers droits (94) et des leviers en L (95), et une pluralité de leviers supplémentaires (97) sont fixés sur les arbres rotatifs à des intervalles donnés ;
dans laquelle le dispositif d'entraînement de moyen de fixation (100) comprend ;
un disque (101) dans une partie centrale duquel est inséré l'arbre rotatif vertical (20), qui tourne sur l'arbre rotatif vertical (20) et se déplace dans la direction verticale ;
un tube en spirale (102) monté autour de l'arbre rotatif vertical (20) pour être mobile dans la direction verticale, ayant une extrémité supérieure fixée sur une surface inférieure du disque (101), et ayant une partie périphérique extérieure formée en spirale et vissée sur une partie centrale d'une roue à vis sans fin (103) ;
la roue à vis sans fin (103) ayant sa partie centrale combinée de façon dentée avec le tube en spirale (102) ;
une vis sans fin (104) combinée de façon dentée avec la circonférence extérieure de la roue à vis sans fin (103) ;
un moteur (105) connecté à un arbre de la vis sans fin (104) ; et
une roulette (106) installée à une extrémité inférieure de l'arbre mobile (93).

2. Génératrice éolienne selon la revendication 1, dans laquelle les unités d'installation de pales intérieures (40) ont soit une structure dans laquelle le plan de coupe qui divise l'unité d'installation en deux (40a, 40b) est parallèle au côté extérieur, soit une structure dans laquelle le plan de coupe qui divise l'unité d'installation en deux (40a', 40b') est diagonal, et sont employées pour chaque groupe de pales dans la direction verticale.

3. Génératrice éolienne selon la revendication 2, dans laquelle les parties de pales (72) sont faites d'un matériau choisi dans le groupe comprenant le plastique renforcé transparent ou opaque, le verre armé, le métal non ferreux et le duralumin.

4. Génératrice éolienne selon la revendication 3, dans laquelle le moyen de fixation de pale (90') a soit une structure dans laquelle le plan de coupe qui divise l'unité mobile en deux (91a, 91b) est parallèle au côté extérieur, soit une structure dans laquelle le plan de coupe qui divise l'unité mobile en deux (91a', 91b') est diagonal,
les unités mobiles de la structure parallèle sont employées pour un groupe de pales dans la direction verticale, et les unités mobiles de la structure diagonale sont employées pour l'autre groupe.

5. Génératrice éolienne selon l'une quelconque des revendications précédentes, dans laquelle les éléments de maintien sont en forme de C.

6. Pluralité de génératrices éoliennes, chacune selon l'une quelconque des revendications précédentes, dans laquelle les génératrices éoliennes sont installées dans les directions avant/arrière et gauche/droite, et les moyens de production d'énergie des génératrices éoliennes respectives sont connectées électriquement entre elles, de sorte que l'énergie produite par tous les moyens de production d'énergie est combinée.

7. Génératrice éolienne selon la revendication 6, dans laquelle une pluralité de poteaux (X) sont installés verticalement sur des parties extérieures avant/arrière et gauche/droite, et connectés et fixés aux parties de roulement des génératrices éoliennes respectives par des fils (Y).
